# FASCICULE DE BREVET EUROPEEN

(11) **EP 3 871 316 B1**
(45) Date de publication et mention de la délivrance du brevet: **28.01.2026**
(21) Numéro de dépôt: 19813104.7
(22) Date de dépôt: 23.10.2019
(51) Int. Cl.: H02K 29/08, H02K 11/215, H02K 1/278, H02K 11/33, H02K 1/14, H02K 21/14

(54) **MACHINE ELECTRIQUE AVEC MESUREMENT DE POSITION AMÉLIORÉE**
ELEKTRISCHE MASCHINE MIT VERBESSERTER POSITIONSMESSUNG
ELECTRIC MACHINE WITH IMPROVED POSITION MEASUREMENT

(30) Priorité: 23.10.2018 FR 1859769
(43) Date de publication de la demande: 01.09.2021
(73) Titulaire: SAFRAN ELECTRONICS & DEFENSE, 75015 Paris (FR)
(72) Inventeur: ROSSI, Alberto, 92100 BOULOGNE-BILLANCOURT (FR); PIATON, Jérôme, 92100 BOULOGNE-BILLANCOURT (FR); DAGUSE, Benjamin, 92100 BOULOGNE-BILLANCOURT (FR)
(74) Mandataire: Regimbeau
(86) Numéro de dépôt international: PCT/FR2019/052536
(87) Numéro de publication internationale: WO 2020/084260

(56) Documents cités:
- EP-A2- 0 565 312
- WO-A1-2015/124876
- DE-T5- 112017 000 172

## Description

### DOMAINE TECHNIQUE DE L'INVENTION

L'invention appartient au domaine technique des machines électriques, notamment de type synchrone, pilotées en fonctionnement moteur pour générer un couple mécanique.

L'invention est notamment d'application avantageuse pour les machines synchrones sans balais dont la position du rotor est mesurée par des capteurs magnétiques, comme des capteurs à effet Hall.

### ETAT DE LA TECHNIQUE

Un moteur synchrone produit un couple mécanique lorsque des bobinages statoriques sont alimentés en courant électrique et font tourner des éléments magnétiques d'un rotor. Dans une configuration répandue, le stator est un cylindre creux et les éléments magnétiques du rotor pivotent à l'intérieur du stator autour de son axe de rotation.

Dans un moteur synchrone sans balais ou « auto-piloté », les courants d'alimentation des bobinages statoriques sont contrôlés en fonction de la position angulaire du rotor autour de son axe.

La direction du champ magnétique produit par le rotor en un point varie en fonction de la position angulaire du rotor.

Ainsi, pour détecter la position angulaire du rotor, il est connu de disposer, sur un même plan de section du stator, des capteurs magnétiques tels que des capteurs à effet Hall. Ces capteurs peuvent mesurer le sens d'une composante normale du champ magnétique.

Le document DE 11 2017 00172T5 décrit une machine électrique selon le préambule de la revendication 1.

Le document WO 2015/124876A1 décrit une machine électrique ayant un support amovible pour des capteurs magnétiques situés à proximité d'un rotor, le support étant porté par un stator.

Le document EP 0 565 312 A2 décrit une machine électrique ayant un capteur à effet Hall sur le stator.

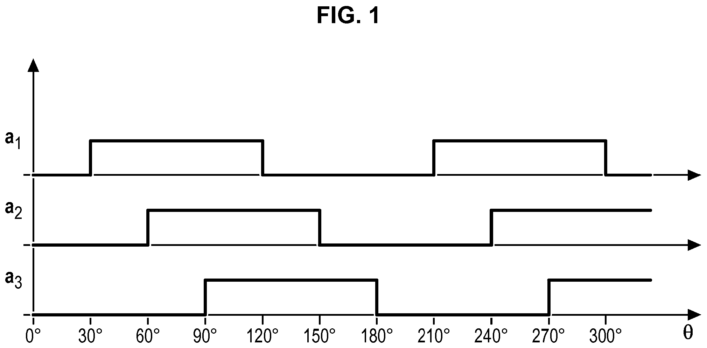

La **Figure 1** représente, de haut en bas, des signaux de position a1, a2, a3 acquis aux bornes de trois capteurs à effet Hall séparés de 60°, en fonction de la position angulaire θ d'un rayon donné du rotor, dans une configuration à trois bobinages statoriques.

Sur cette figure, le signal de position à créneaux aux bornes d'un capteur donné opère une transition lors d'un changement de sens d'une composante du champ magnétique qui est normale audit capteur.

Toutefois, la mesure fournie par une sonde à effet Hall selon le principe ci-avant peut souffrir d'une certaine incertitude. Cette incertitude de mesure dépend notamment de la taille de la machine électrique et de sa vitesse de fonctionnement, et peut atteindre plusieurs degrés, par exemple jusqu'à 5 degrés.

Or, lorsque le rotor se trouve près de la position d'inversion de polarité d'un capteur à effet Hall, les valeurs absolues de champ magnétique perçues par le capteur sont proches de zéro comparativement à cette plage d'incertitude.

Ainsi, dans des cas extrêmes d'erreur de mesure, le capteur peut détecter un changement de polarité alors que le rotor n'a pas dépassé la position d'inversion de polarité, ou inversement.

La détermination de position du rotor peut alors être erronée, avec pour conséquence une commande en courant non optimale des bobinages (pouvant créer des oscillations de couple, c'est-à-dire des variations non négligeables entre la valeur réelle du couple moteur fourni et la valeur nominale).

Un autre problème posé par l'utilisation actuelle des sondes à effet Hall est une possible erreur de calage des sondes. A titre d'exemple, si les sondes sont supposées avoir un écart angulaire de 60° deux à deux, une sonde peut se trouver décalée et avoir un écart différent de 60° avec les sondes voisines.

Or, la mesure de polarité magnétique fournie par des capteurs à effet Hall est très sensible à l'inclinaison et à la position des capteurs.

Là encore, la détermination de position du rotor est erronée. Des oscillations de couple moteur sont à déplorer, et ce même dans un cas hypothétique où la mesure de polarité magnétique au niveau des capteurs ne souffrirait pas d'incertitude.

Une solution connue pour améliorer le calage des sondes à effet Hall consiste à pratiquer des logements de sondes dans le stator et à coller chaque sonde dans un logement. Cette solution n'est cependant pas entièrement satisfaisante car la sonde peut se décaler s'il existe un jeu dans le logement. Par ailleurs, cette solution ne résout pas le problème évoqué ci-avant de l'incertitude de mesure. La détection de position angulaire du rotor demeure trop imprécise.

On déplore donc toujours un niveau d'oscillations de couple moteur qui est inacceptable pour de nombreuses applications pratiques.

### PRESENTATION GENERALE DE L'INVENTION

Il existe un besoin pour un moteur électrique pour lequel l'information fournie par des capteurs magnétiques de position du rotor est fiable, de sorte à ne pas générer d'oscillations de couple moteur.

On recherche une solution qui soit adaptable à des moteurs synchrones avec capteurs à effet Hall pour détecter la position du rotor.

De préférence, la solution recherchée doit présenter une masse et un encombrement faibles, de sorte à pouvoir être exploitée dans de nombreux contextes techniques et notamment en aéronautique.

A ce titre, l'invention concerne une machine électrique conforme à la revendication 1.

La machine électrique de l'invention présente plusieurs avantages.

La pièce ajoutée au niveau du stator crée une zone d'amplification de la composante normale du champ magnétique, en particulier d'un gradient de la composante normale du champ magnétique, au voisinage de la surface de détection du capteur magnétique. Ainsi, pour un même déplacement angulaire du rotor, la variation de ladite composante normale du champ est plus importante. L'incertitude de la mesure fournie par le capteur a donc un impact moindre sur la détection de la position d'inversion de polarité.

On augmente ainsi la précision de la détection de la position d'inversion de polarité du rotor, sans changer le capteur magnétique. Un avantage est d'éviter que le champ magnétique ne sature la première zone et la deuxième zone de la pièce.

De plus, l'ajout de la pièce ne nécessite pas de modifier en profondeur l'architecture de la machine électrique. La pièce peut par exemple être simplement intercalée entre le capteur magnétique et le stator.

On dispose ainsi d'une solution simple pour améliorer les performances électromagnétiques de la machine électrique, sans fortement encombrer ou alourdir le système.

En outre, la pièce métallique, qui est d'un seul tenant, assure que l'écart angulaire entre les deux capteurs magnétiques soit conforme. On peut réaliser le calage d'une seule pièce, au lieu d'un calage de plusieurs capteurs séparés. De plus, la présence d'une troisième zone d'épaisseur radiale réduite permet d'éviter que le champ magnétique ne sature au niveau de la première zone et la deuxième zone de la pièce, la première zone et la deuxième zone étant situées au voisinage des capteurs magnétiques.

Les revendications 2 à 7 concernent des modes de réalisation de l'invention.

La machine de l'invention peut présenter les caractéristiques supplémentaires suivantes, non limitatives, prises seules ou en l'une quelconque des combinaisons techniquement possibles :
- la pièce étant d'un seul tenant ; Un avantage de cette variante est qu'on limite à la fois l'impact de l'incertitude de mesure des capteurs et la probabilité d'erreurs de calage d'un des capteurs. La pièce, qui est d'un seul tenant, joue le rôle d'amplification de la composante normale du champ magnétique pour plusieurs capteurs. On est ainsi assuré que l'écart angulaire entre les deux capteurs est conforme. On peut réaliser le calage d'une seule pièce, au lieu d'un calage de plusieurs capteurs séparés. Avec cette variante, on réduit encore davantage les erreurs de détection de la position angulaire du rotor ;
- les capteurs magnétiques sont intercalés entre la pièce et le rotor et sont montés fixes sur la pièce ;
- un élément magnétique du rotor comprend un aimant permanent ou un électroaimant ;
- la machine électrique comprend en outre un dispositif de commande d'un courant électrique circulant dans les bobinages, le dispositif de commande étant configuré pour piloter une fréquence d'un courant électrique au sein d'un des bobinages en fonction d'un signal de changement de polarité transmis par un capteur magnétique ;
- dans cette dernière variante, la machine comprend trois bobinages configurés pour fonctionner avec une alimentation en courant triphasé, le dispositif de commande étant configuré pour générer via les bobinages une force électromotrice de type trapézoïdal afin de générer une rotation du rotor par rapport au stator.

### PRESENTATION GENERALE DES FIGURES

D'autres caractéristiques, buts et avantages de l'invention ressortiront de la description qui suit, qui est purement illustrative et non limitative, accompagnée de la Figure 1 déjà commentée ci-avant ainsi que des autres dessins annexés, parmi lesquels :
La **Figure 2** est une vue en perspective d'une machine synchrone de l'art antérieur comprenant un stator à trois bobinages et un rotor à aimants permanents ;
La **Figure 3** est un schéma partiel en coupe d'une machine synchrone selon un premier mode de réalisation de l'invention, avec un plan de coupe perpendiculaire à l'axe de rotation de la machine ;
La **Figure 4** représente schématiquement un capteur à effet Hall ;
La **Figure 5** est une carte de champ magnétique à l'interface entre le rotor et le stator dans une machine non dotée de la pièce ;
La **Figure 6** est une autre carte de champ magnétique à l'interface entre le rotor et le stator dans une machine présentant la pièce;
La **Figure 7** est un schéma partiel en coupe d'une machine synchrone selon un deuxième mode de réalisation de l'invention, avec un plan de coupe perpendiculaire à l'axe de rotation de la machine.

### DESCRIPTION DETAILLEE DE MODES DE REALISATION

Dans la description qui va suivre et sur les figures annexées, des éléments similaires sont associés aux mêmes références numériques.

Par « éléments magnétiques », on entend les éléments responsables de la mise en rotation du rotor en fonctionnement moteur, par interaction avec le champ magnétique du stator ; les éléments magnétiques peuvent notamment être des aimants permanents ou des électroaimants alimentés en courant continu.

Par ailleurs, dans toute la suite, on décrira des exemples particuliers de réalisation de l'invention dans le cas d'une machine synchrone en fonctionnement moteur, dont la vitesse de rotation du rotor dépend de la fréquence du courant électrique appliqué aux bobinages. Le stator s'étend ici à l'extérieur du rotor.

Toutefois, l'invention s'applique avec les mêmes avantages pour une autre architecture de machine synchrone, pour une machine synchrone en fonctionnement générateur, ou pour tout autre type de machine électrique dans laquelle la position angulaire des éléments magnétiques doit être mesurée.

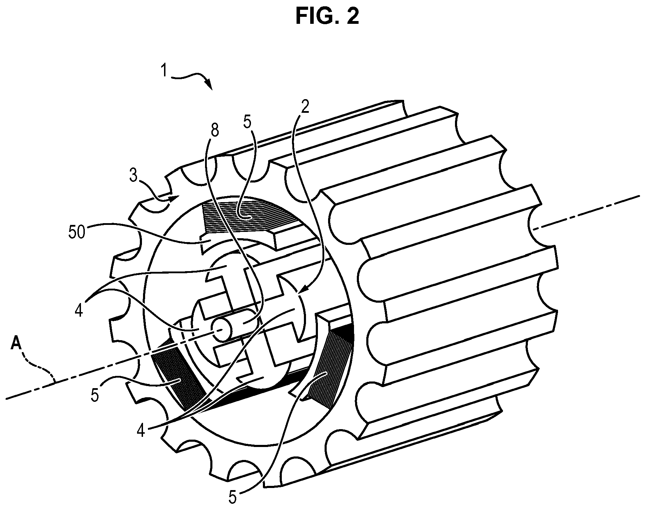

On a représenté en **Figure 2** une machine synchrone 1 selon un mode de réalisation, pouvant être utilisée dans un moteur d'aéronef.

La machine 1 comprend un rotor 2 à aimants permanents et un stator 3 en forme de cylindre creux s'étendant autour du rotor 2.

Le rotor 2 comprend des éléments magnétiques, ici quatre aimants permanents 4 espacés de 90° deux à deux, dont deux aimants face à face ayant une polarité « Nord » et deux aimants face à face ayant une polarité « Sud ». En alternative, on pourrait fournir un nombre d'éléments magnétiques différent. Le rotor 2 dispose d'un degré de liberté en rotation autour d'un arbre 8 de rotor le long d'un axe A.

Face aux aimants 4 du rotor, le stator 3 présente, sur une surface intérieure, des bobinages statoriques 5. Les bobinages 5 sont propres à être alimentés par un courant électrique et entraîner le rotor en rotation par rapport au stator, du fait de l'interaction entre le champ magnétique des bobinages et le champ magnétique des éléments magnétiques du rotor. Ici, la machine 1 comprend trois bobinages 5 espacés de 120° deux à deux autour de l'axe A. Chaque bobinage s'enroule autour d'un pôle magnétique du stator et est limité vers l'intérieur par une surface 50 faisant face au rotor.

En fonctionnement moteur, l'alimentation des bobinages statoriques crée un flux magnétique qui interagit avec le champ magnétique des aimants du rotor et fait tourner le rotor. Une fréquence du courant fourni aux bobinages détermine une vitesse de rotation de l'arbre 8 du rotor.

En fonctionnement générateur, on applique un couple mécanique externe sur le rotor. Le flux magnétique varie au sein des bobinages et induit un courant électrique dans les bobinages qui peut être récupéré.

Dans l'exemple qui va suivre, on se place en fonctionnement moteur.

La machine 1 présente trois bobinages 5 alimentés en courant triphasé par un dispositif de contrôle d'alimentation électrique (non représenté sur les figures).

La force électromotrice au niveau d'un bobinage donné dépend de la tension à ses bornes. On cherche à obtenir, au niveau de l'arbre 8 du rotor, un couple mécanique correspondant à une consigne prédéterminée, par exemple un couple constant. Pour ce faire, on commute le sens du courant électrique aux bornes de chacun des bobinages de manière synchronisée avec la rotation du rotor.

Pour un bobinage donné, lorsque le rotor dépasse une position angulaire prédéterminée, on sait que le champ magnétique au sein du bobinage a changé (par exemple, si l'interface entre un aimant « Nord » et un aimant « Sud » est passée devant un axe du bobinage) et qu'il faut faire commuter le sens du courant aux bornes dudit bobinage.

Il convient donc de fournir au dispositif de contrôle d'alimentation électrique une information très précise de position du rotor.

En effet, si l'information de position fournie au dispositif de contrôle d'alimentation électrique est imprécise, les tensions des bobinages sont commutées au mauvais moment. Le stator et le rotor ne sont plus synchrones et des oscillations de couple moteur sont générées.

Pour réaliser la mesure de position du rotor, on peut placer, sur un plan décalé axialement par rapport aux surfaces 50 du stator, des capteurs magnétiques de position rotorique (non représentés sur la Figure 2). Ledit décalage axial s'entend le long de l'axe A du moteur électrique.

Typiquement, le rotor 2 s'étend sur un prolongement axial au-delà des bobinages 5 et des surfaces 50 (ce prolongement n'étant pas illustré sur la Figure 1). Les capteurs magnétiques de position rotorique sont positionnés face audit prolongement axial, et sont espacés axialement par rapport aux surfaces 50.

Dans un mode de réalisation préféré, les capteurs magnétiques de position rotorique sont des capteurs à effet Hall.

En fonction du sens de la composante du champ magnétique normale au capteur, la différence de potentiel aux bornes du capteur est positive ou négative. Par « composante normale » on entend la projection du champ magnétique total détecté par le capteur sur un axe du capteur orthogonal à la plaquette du capteur. La plaquette du capteur forme une surface de détection de la composante normale du champ magnétique. Le capteur peut donc détecter un changement de position du rotor qui entraîne un changement de sens de la composante normale.

En alternative, on peut utiliser d'autres types de capteurs magnétiques, par exemple des capteurs inductifs.

Le dispositif de contrôle d'alimentation électrique pilote le déplacement du rotor le long de sa période. Le dispositif de contrôle d'alimentation électrique peut être configuré pour générer au niveau des bobinages statoriques une force électromotrice de type trapézoïdal.

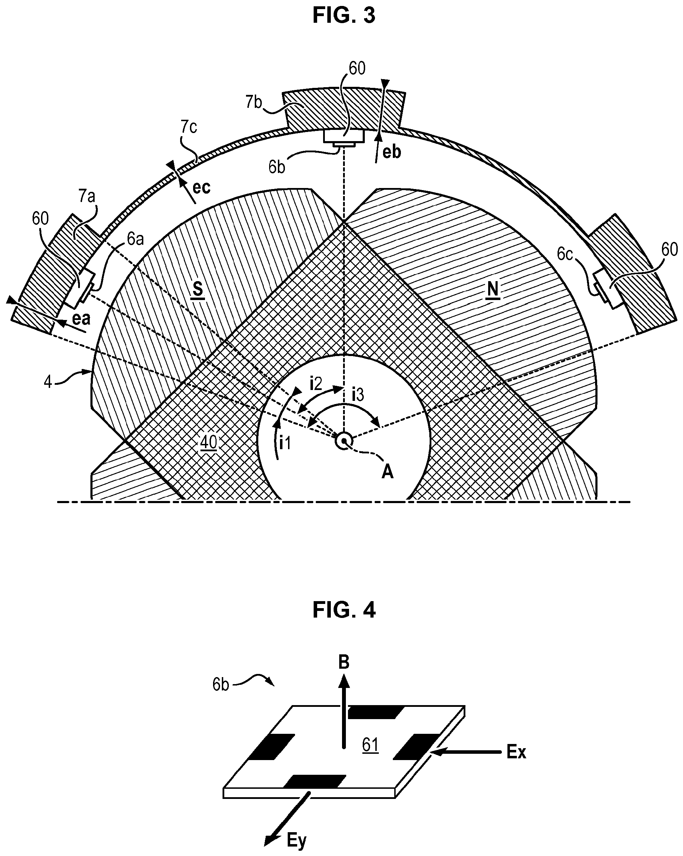

On a représenté schématiquement en **Figure 3** une moitié d'une machine synchrone selon un mode de réalisation de l'invention, vue en coupe selon un plan de section orthogonal à l'axe A du rotor 2. Le rotor 2 comprend des éléments magnétiques, ici quatre aimants permanents 4 en périphérie d'une zone non aimantée 40.

Le plan de coupe passe par trois capteurs 6a, 6b et 6c à effet Hall placés sur des surfaces 60 respectives face au rotor.

La **Figure 4** représente le capteur à effet Hall 6b. Le capteur à effet Hall comprend une plaquette 61 aux bornes de laquelle une tension Ex est appliquée. La plaquette 61 forme une surface de détection de la composante normale du champ magnétique exercé sur le capteur.

Lorsque le capteur 6b est soumis à un champ magnétique ayant une composante normale à la surface de détection, portant la référence B sur la figure, une différence de potentiel Ey apparaît aux bornes du capteur. Le signe de la différence de potentiel Ey correspond au sens de la composante normale du champ par rapport à la surface de détection.

De retour à la Figure 3, chacun des capteurs à effet Hall doit être orienté de sorte qu'un changement de sens de la composante normale aux bornes d'un capteur corresponde à un passage d'une interface entre un aimant Nord du rotor (portant la référence N sur la figure) et un aimant Sud du rotor (portant la référence S).

L'écart angulaire i2 entre les capteurs 6a et 6b est de 60°. De même, l'écart angulaire entre les capteurs 6b et 6c est de 60°.

Sur la Figure 3, le rotor se trouve à une position angulaire où le capteur 6a et le capteur 6c ne perçoivent pas un changement de sens de la composante normale du champ.

En revanche, la composante normale du champ magnétique sur le capteur 6b s'annule. Dans l'état représenté sur la Figure 3, le capteur 6b doit donc percevoir une inversion de sens de la composante normale du champ.

Cependant, la mesure du capteur à effet Hall 6b est affectée d'une incertitude. Le capteur 6b est donc susceptible de percevoir un changement de polarité à une position du rotor légèrement décalée, vers la droite ou vers la gauche, par rapport à la position représentée en Figure 3.

Conformément à l'invention, la machine électrique comprend une pièce 7, solidaire du stator 3. La pièce 7 comprend une zone 7b configurée pour amplifier la composante normale du champ magnétique au niveau du capteur magnétique 6b, en particulier le gradient de la composante normale du champ magnétique.

De façon préférée, la pièce 7 fait face à un prolongement axial du rotor 2, ledit prolongement s'étendant au-delà des bobinages du stator 3. Ainsi, la pièce 7 est espacée axialement des bobinages du stator 3, ledit espacement axial s'entendant par rapport à l'axe du moteur.

La zone 7b est typiquement un secteur de cylindre en métal, par exemple en fer. La zone 7b est ici d'épaisseur eb. L'épaisseur eb est par exemple de plusieurs millimètres, préférentiellement entre 1 et 20 millimètres, encore plus préférentiellement entre 5 et 10 millimètres. La zone 7b est placée derrière la surface 60 qui porte le capteur 6b, solidairement au stator.

Ainsi, pour une même position du rotor, la composante normale du champ perçu par le capteur 6b est augmentée en valeur absolue.

L'impact de la plage d'incertitude du capteur 6b sur la détection de changement de polarité est donc moindre.

A titre d'exemple, si la plage d'incertitude du capteur 6b est de 0,05 Tesla, le capteur 6b peut détecter un changement de sens de la composante normale du champ, alors que la composante normale du champ magnétique ne change pas de sens et est comprise entre -0,05 Tesla et 0,05 Tesla.

En présence de la zone 7b, la composante normale du champ magnétique est amplifiée. Un même déplacement angulaire du rotor cause donc une variation plus importante de la composante normale du champ au niveau du capteur. Ainsi, la même incertitude pour le changement de polarité (de -0,05 Tesla à 0,05 Tesla) donne une petite plage d'incertitude de position du rotor (par exemple de -0,1° à 0,1°).

L'amplification de la composante normale du champ par la zone 7b de la pièce 7 améliore donc la synchronisation de la commutation du courant dans les bobinages. On contrôle mieux le mouvement de rotation induit du rotor.

On notera que grâce à cette solution, la précision de mesure des capteurs à effet Hall est améliorée, sans modifier ni les capteurs, ni l'électronique de commande du courant dans les bobinages statoriques.

De façon non nécessaire mais avantageuse, la pièce 7 comprend deux zones 7a et 7b d'amplification de la composante normale du champ magnétique correspondant à deux capteurs 6a et 6b. Une zone 7c de la pièce s'étend de la zone 7a jusqu'à la zone 7b. La pièce 7 est d'un seul tenant entre les zones 7a et 7b.

Le fait d'avoir deux zones d'amplification de la composante normale du champ magnétique correspondant à deux sondes à effet Hall distinctes, avec une liaison au sein de la pièce 7 entre les deux zones, facilite le calage des capteurs. Au lieu d'ajuster séparément la position de deux capteurs, on ajuste la position angulaire d'un seul élément (la pièce 7) par rapport au rotor.

Cette configuration de la pièce 7 permet donc de garantir une meilleure orientation et un écart angulaire correct entre les deux capteurs (ici 60°). On augmente encore davantage la précision de l'information de position du rotor fournie par les capteurs à effet Hall.

On comprendra qu'il est encore plus avantageux d'avoir sur la même pièce 7 trois zones d'amplification de la composante normale du champ magnétique correspondant à trois capteurs, comme sur la Figure 3. On garantit ainsi un écart angulaire correct entre trois capteurs.

Dans cet exemple, la pièce 7 est en forme de secteur de bague et recouvre les trois capteurs magnétiques 6a, 6b et 6c. Une amplitude angulaire i3 de la pièce 7 est supérieure à 120°, ici d'environ 140°.

Mais en alternative, la pièce 7 pourrait correspondre à un seul capteur à effet Hall, par exemple en étant limitée à la zone 7b.

De façon préférée, une épaisseur radiale maximale ec de la zone 7c, selon le plan de section de la Figure 3, est inférieure à une épaisseur radiale minimale ea de la zone 7a ainsi qu'à une épaisseur radiale minimale eb de la zone 7b.

De préférence, l'épaisseur ec est inférieure à 50% de l'épaisseur 7a et de l'épaisseur 7b (par exemple comprise entre 20% et 40%).

Par exemple, l'épaisseur ec est comprise entre 1 et 3 millimètres.

La zone 7c plus « fine » sature plus facilement, par contraste avec les zones 7a et 7b qui saturent peu.

La zone 7c canalise le champ magnétique produit par les aimants 4. Le champ magnétique est donc plus intense au niveau de la zone 7c.

Un avantage de cette configuration est de réduire le risque de saturation des zones situées derrière des capteurs (ici les zones 7a et 7b). La saturation de ces zones pourrait perturber l'interaction entre les champs magnétiques du rotor et du stator, et perturber le mouvement angulaire du rotor.

Dans l'exemple de la Figure 3, le secteur angulaire i1 sur lequel s'étend la zone 7a d'épaisseur élevée a une amplitude comprise entre 10° et 30°, de préférence de 20°. De même, la zone 7b a une amplitude angulaire voisine de 20°. Le secteur angulaire restant (environ 40°) est occupé par une zone 7c d'épaisseur faible.

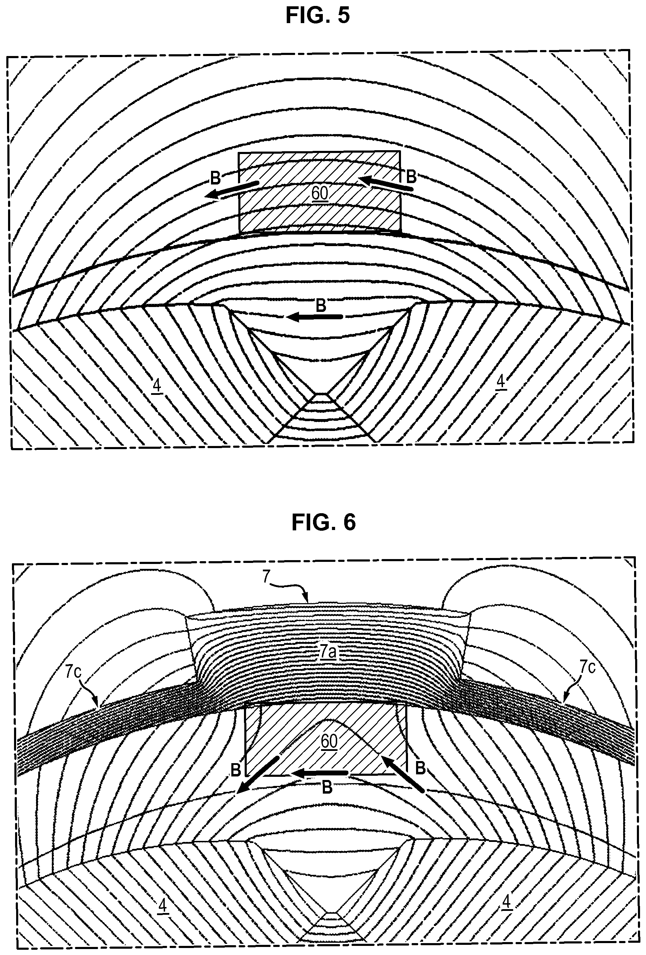

Pour illustrer l'amplification de la composante normale du champ magnétique par la pièce 7 et le phénomène de saturation, on a représenté en **Figure 5** une carte de champ magnétique au voisinage du capteur 6b sans la pièce 7, lorsque le rotor est dans la position angulaire représentée en Figure 3. On a représenté en **Figure 6** une carte de champ magnétique au voisinage du capteur 6b avec ajout de la pièce 7.

Sur ces deux figures, l'aimant Nord est en bas à droite et l'aimant Sud est en bas à gauche. Ainsi, le champ magnétique B dans l'entrefer est orienté de la droite vers la gauche. La zone de la surface 60 porteuse du capteur à effet Hall est représenté sur les deux figures.

On constate que le champ magnétique est déformé verticalement au niveau de la zone de la surface 60 sur la Figure 6. La présence de la pièce 7 et notamment de la zone d'amplification 7a de la composante normale du champ magnétique déforme les lignes de champ magnétique vers le haut.

Grâce à la zone d'amplification de la composante normale du champ magnétique, notamment du gradient de la composante normale du champ magnétique, le changement de direction des lignes de champ magnétique (c'est-à-dire l'inversion de polarité du champ magnétique) est plus concentré au niveau du centre de la sonde à effet Hall. Le gradient de la composante normale du champ magnétique est accru dans la zone de la surface 60 sur la Figure 6, par rapport à la configuration de la Figure 5 sans pièce 7.

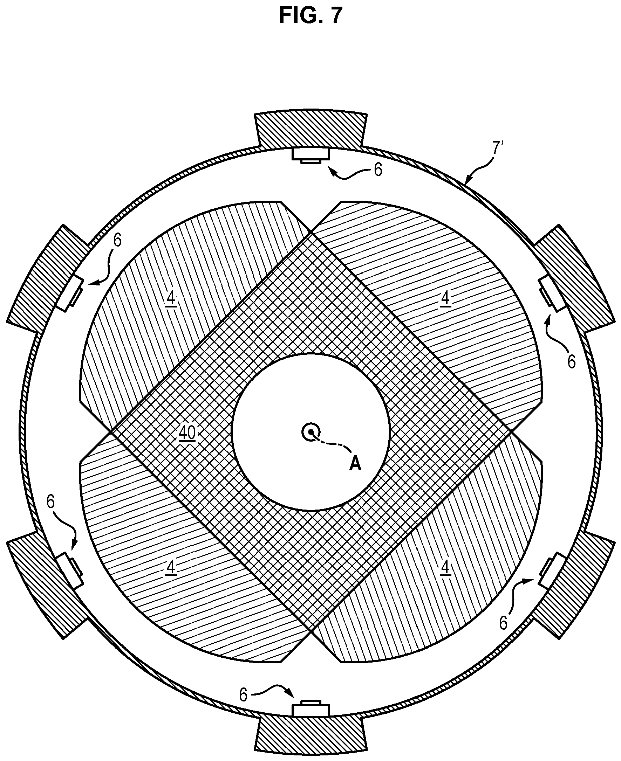

Une machine synchrone selon un mode de réalisation alternatif est représentée en **Figure 7****,** en coupe selon un plan de section orthogonal à l'axe A du rotor.

Ici, la machine comprend six capteurs à effet Hall 6 répartis sur toute la périphérie du rotor. Les capteurs 6 sont espacés deux à deux de 60° et recouvrent toute la plage de déplacement angulaire du rotor.

Dans ce mode, une bague 7' solidaire du stator réalise une amplification localisée de la composante normale du champ magnétique, telle que décrite précédemment en relation à la pièce 7 de la Figure 3.

La bague 7' est en forme de secteur de cylindre métallique, par exemple en fer. De même que pour la machine de la Figure 3, chaque capteur magnétique 6 est associé à une zone d'épaisseur radiale élevée de la bague 7'. Deux zones consécutives d'épaisseur élevée sont reliées par une zone d'épaisseur faible.

La bague 7' permet de réduire l'incertitude de la détection du changement de sens de la composante normale du champ magnétique, au niveau de chacun des capteurs magnétiques 6. La forme de la bague 7' permet un bon calage des capteurs 6 et accroît encore la précision de détection de la position angulaire du rotor.

Ce mode de réalisation est avantageux car la détection de position du rotor est améliorée sur l'intégralité de la plage de déplacement angulaire du rotor.

## Revendications

1. Machine électrique (1) comprenant un rotor (2) et un stator (3), le rotor (2) étant mobile en rotation par rapport au stator (3) autour d'un axe de rotation (A) et comportant une pluralité d'aimants permanents (4) ou une pluralité d'électroaimants, le stator (3) comportant une pluralité de bobinages (5) solidaires du stator (3) et propres à être alimentés par un courant électrique de manière à entraîner en rotation le rotor (2) par rapport au stator (3),
le stator comprenant un premier capteur magnétique (6a) et un deuxième capteur magnétique (6b) comprenant chacun une surface (61) de détection, le premier capteur magnétique (6a) et le deuxième capteur magnétique (6b) étant disposés sur un même plan de section orthogonal à l'axe de rotation (A), la machine comprenant un premier secteur angulaire (i1) le long duquel est disposé le premier capteur magnétique (6a) et comprenant un deuxième secteur angulaire le long duquel est disposé le deuxième capteur magnétique (6b),
lesdits capteurs magnétiques (6a, 6b) étant configurés pour détecter un changement de sens d'une composante normale d'un champ magnétique généré par les aimants permanents (4) ou électroaimants, la composante normale étant orthogonale à la surface (61) de détection,
la machine électrique comprenant une pièce (7) métallique solidaire du stator (3),
la machine électrique étant **caractérisée en ce que** ladite pièce métallique (7) est d'un seul tenant et comprend:
- une première zone (7a) d'amplification de la composante normale du champ magnétique, la première zone (7a) s'étendant dans le premier secteur angulaire (i1) et derrière une première surface (60) qui porte le premier capteur magnétique (6a) et qui est face au rotor (2),
- une deuxième zone (7b) d'amplification de la composante normale du champ magnétique, la deuxième zone (7b) s'étendant dans le deuxième secteur angulaire et derrière une deuxième surface (60) qui porte le deuxième capteur magnétique (6b) et qui est face au rotor (2),
- une troisième zone (7c) s'étendant depuis la première zone (7a) jusqu'à la deuxième zone (7b), une épaisseur radiale maximale (ec) de la troisième zone (7c) dans le plan de section orthogonal étant inférieure à une épaisseur radiale minimale (ea) de la première zone (7a) et à une épaisseur minimale (eb) de la deuxième zone (7b) dans le plan de section.

2. Machine électrique selon la revendication 1, dans laquelle le premier secteur angulaire (i1) dans lequel s'étend la première zone (7a) d'amplification de la composante normale du champ magnétique a une amplitude angulaire comprise entre 10 degrés et 30 degrés, de préférence de 20 degrés.

3. Machine électrique selon l'une quelconque des revendications 1 ou 2, dans laquelle la pièce a une forme de bague (7') ou une forme de secteur de bague (7).

4. Machine électrique selon l'une quelconque des revendications 1 à 3, dans laquelle les capteurs magnétiques (6a, 6b) sont répartis chacun au voisinage d'une des zones (7a, 7b) d'amplification de la composante normale du champ magnétique et à des positions angulaires espacées régulièrement le long de tout un périmètre de la machine.

5. Machine électrique selon la revendication 4, comprenant six capteurs magnétiques (6) espacés deux à deux de 60 degrés.

6. Machine électrique selon l'une quelconque des revendications 1 à 5, dans laquelle chaque capteur magnétique comprend une sonde à effet Hall (6).

7. Machine électrique selon l'une quelconque des revendications 1 à 6, dans laquelle la pièce (7) est configurée pour amplifier, au niveau de l'une des surfaces (61) de détection, un gradient de la composante, normale à ladite surface (61) de détection, du champ magnétique produit par les aimants permanents ou par les électroaimants.

## Patentansprüche

1. Elektrische Maschine (1), umfassend einen Rotor (2) und einem Stator (3), wobei der Rotor (2) relativ zum Stator (3) um eine Drehachse (A) rotatorisch beweglich ist und eine Vielzahl von Permanentmagneten (4) oder eine Vielzahl von Elektromagneten aufweist, wobei der Stator (3) eine Vielzahl von Wicklungen (5) aufweist, die mit dem Stator (3) fest verbunden sind und imstande, mit einem elektrischen Strom derart versorgt zu werden, dass der Rotor (2) relativ zum Stator (3) rotatorisch angetrieben wird,
wobei der Stator einen ersten Magnetsensor (6a) und einen zweiten Magnetsensor (6b) umfasst, die jeweils eine Detektionsfläche (61) umfassen, wobei der erste Magnetsensor (6a) und der zweite Magnetsensor (6b) auf derselben Schnittebene angeordnet sind, die orthogonal zur Drehachse (A) verläuft, wobei die Maschine einen ersten Winkelsektor (i1) umfasst, entlang dem der erste Magnetsensor (6a) angeordnet ist, und einen zweiten Winkelsektor umfasst, entlang dem der zweite Magnetsensor (6b) angeordnet ist,
wobei die Magnetsensoren (6a, 6b) ausgelegt sind, um eine Richtungsänderung einer normalen Komponente eines von den Permanentmagneten (4) oder Elektromagneten erzeugten Magnetfelds zu erfassen, wobei die normale Komponente orthogonal zur Detektionsfläche (61) ist,
wobei die elektrische Maschine ein Metallteil (7) umfasst, das mit dem Stator (3) fest verbunden ist,
wobei die elektrische Maschine **dadurch gekennzeichnet ist, dass** das Metallteil (7) einteilig ist und umfasst:
- einen ersten Verstärkungsbereich (7a) der normalen Komponente des Magnetfelds, wobei sich der erste Bereich (7a) im ersten Winkelsektor (i1) und hinter einer ersten Fläche (60) erstreckt, die den ersten Magnetsensor (6a) trägt und die dem Rotor (2) gegenüber ist,
- einen zweiten Verstärkungsbereich (7b) der normalen Komponente des Magnetfelds, wobei sich der zweite Bereich (7b) im zweiten Winkelsektor und hinter einer zweiten Fläche (60) erstreckt, die den zweiten Magnetsensor (6b) trägt und die dem Rotor (2) gegenüber ist,
- einen dritten Bereich (7c), der sich vom ersten Bereich (7a) bis zum zweiten Bereich (7b) erstreckt,
wobei eine maximale radiale Dicke (ec) des dritten Bereichs (7c) in der orthogonalen Schnittebene kleiner ist als eine minimale radiale Dicke (ea) des ersten Bereichs (7a) und als eine minimale Dicke (eb) des zweiten Bereichs (7b) in der Schnittebene.

2. Elektrische Maschine nach Anspruch 1, wobei der erste Winkelsektor (i1), in dem sich der erste Verstärkungsbereich (7a) der normalen Komponente des Magnetfelds erstreckt, eine Winkelamplitude zwischen 10 Grad und 30 Grad, vorzugsweise von 20 Grad, hat.

3. Elektrische Maschine nach einem der Ansprüche 1 oder 2, wobei das Teil eine Ringform (7') oder eine Ringsektorform (7) hat.

4. Elektrische Maschine nach einem beliebigen der Ansprüche 1 bis 3, wobei die Magnetsensoren (6a, 6b) jeweils in der Nähe einer der Verstärkungsbereiche (7a, 7b) der normalen Komponente des Magnetfelds und in regelmäßig beabstandeten Winkelpositionen entlang eines gesamten Umfangs der Maschine angeordnet sind.

5. Elektrische Maschine nach Anspruch 4, umfassend sechs Magnetsensoren (6), die paarweise im Abstand von 60 Grad voneinander angeordnet sind.

6. Elektrische Maschine nach einem beliebigen der Ansprüche 1 bis 5, wobei jeder Magnetsensor eine Hall-Effekt-Sonde (6) umfasst.

7. Elektrische Maschine nach einem beliebigen der Ansprüche 1 bis 6, wobei das Teil (7) ausgelegt ist, um im Bereich einer der Detektionsflächen (61) einen Gradienten der zu der Detektionsfläche (61) orthogonalen Komponente des von den Permanentmagneten oder Elektromagneten erzeugten Magnetfelds zu verstärken.

## Claims

1. An electrical machine (1) comprising a rotor (2) and a stator (3), the rotor (2) being movable in rotation relative to the stator (3) around an axis of rotation (A) and including a plurality of permanent magnets (4) or a plurality of electromagnets, the stator (3) including a plurality of windings (5) integral with the stator (3) and able to be supplied by an electrical current so as to drive the rotor (2) in rotation relative to the stator (3),
the stator comprising a first magnetic sensor (6a) and a second magnetic sensor (6b) each comprising a detection surface (61), the first magnetic sensor (6a) and the second magnetic sensor (6b) being positioned on the same section plane orthogonal to the axis of rotation (A), the machine comprising a first angular sector (i1) along which the first magnetic sensor (6a) is positioned and comprising a second angular sector along which the second magnetic sensor (6b) is positioned,
said magnetic sensors (6a, 6b) being configured to detect a change of direction of a normal component of a magnetic field generated by the permanents magnets (4) or electromagnets, the normal component being orthogonal to the detection surface (61),
the electrical machine comprising a metal part (7) integral with the stator (3),
the electric machine being **characterised in that** said metal part (7) is of one piece and comprises :
- a first amplification zone (7a) of the normal component of the magnetic field, the first zone (7a) extending in the first angular sector (i1) and behind a first surface (60) which carries the first magnetic sensor (6a) and which faces the rotor (2),
- a second amplification zone (7b) of the normal component of the magnetic field, the second zone (7b) extending in the second angular sector and behind a second surface (60) which carries the second magnetic sensor (6b) and which faces the rotor (2),
- a third zone (7c) extending from the first zone (7a) to the second zone (7b), wherein a maximum radial thickness (ec) of the third zone (7c) in the section orthogonal plane is less than a minimum radial thickness (ea) of the first zone (7a) and is less than a minimum thickness (eb) of the second zone (7b) in the section plane.

2. The electrical machine according to claim 1, wherein the first angular sector (i1), in which the first amplification zone (7a) of the normal component of the magnetic field extends, has an angular amplitude comprised between 10 degrees and 30 degrees, preferably 20 degrees.

3. The electrical machine according to any one of claims 1 or 2, wherein the part has the shape of a ring (7') or the shape of a ring (7) sector.

4. The electrical machine according to any one of claims 1 to 3, wherein the magnetic sensors (6a, 6b) are each distributed in proximity to one of the field amplification zones (7a, 7b) of the normal component of the magnetic field and at angular positions spaced regularly along an entire perimeter of the machine.

5. The electrical machine according to claim 4, comprising six magnetic sensors (6) spaced two by two at 60 degrees.

6. The electrical machine according to any one of claims 1 to 5, wherein each magnetic sensor comprises a Hall-effect probe (6).

7. The electrical machine according to any one of claims 1 to 6, wherein the part (7) is configured to amplify, at one of the detection surfaces (61), a gradient of the normal component to said detection surface (61) of the magnetic field produced by the permanent magnets or by the electromagnets.
